# EUROPEAN PATENT APPLICATION

(11) **EP 4 760 545 A1**
(43) Date of publication of application: **17.06.2026**
(21) Application number: 24853685.6
(22) Date of filing: 09.08.2024
(51) Int. Cl.: G06F 16/957, G06F 3/0483

(54) **PAGE CONTENT DISPLAY METHOD AND APPARATUS, ELECTRONIC DEVICE, AND STORAGE MEDIUM**

(30) Priority: 11.08.2023 CN 202311016553
(71) Applicant: Beijing Zitiao Network Technology Co., Ltd., Beijing 100190 (CN)
(72) Inventor: HE, Zhimiao, Beijing 100028 (CN); LIN, Peiyin, Beijing 100028 (CN)
(74) Representative: Grünecker Patent- und Rechtsanwälte PartG mbB
(86) International application number: PCT/CN2024/110966
(87) International publication number: WO 2025/036276

(57) **Abstract**

Embodiments of the disclosure provide a method, an apparatus, an electronic device and a storage medium for displaying page content. The method includes: receiving a predetermined page display operation for a media content generation page, the media content generation page being configured to obtain and/or generate first media content; and displaying, in response to the predetermined page display operation, at least part of first page content of the media content generation page, and associatively displaying at least part of second page content of information display page, the information display page displaying a predetermined media content set, and the predetermined media content set being a set of at least part of second media content that has been posted.

## Description

This application claims the benefit of Chinese Patent Application No. 202311016553.1, filed on August 11, 2023, entitled "METHOD, APPARATUS, ELECTRONIC DEVICE AND STORAGE MEDIUM FOR DISPLAYING PAGE CONTENT", the entire contents of which are incorporated herein by reference.

### FIELD

Embodiments of the present disclosure relate to the technical field of computers, in particular to a method, an apparatus, an electronic device and a storage medium for displaying page content.

### BACKGROUND

In the related art, the user may capture based on page content of a capturing page. However, the content displayed when displaying the page content of the capturing page is relatively simple.

### SUMMARY

The embodiments of the present disclosure provide a method, an apparatus, an electronic device and a storage medium for displaying page content.

In a first aspect, the embodiments of the present disclosure provide a method for displaying page content, including:
receiving a predetermined page display operation for a media content generation page, the media content generation page being configured to obtain and/or generate first media content;
displaying, in response to the predetermined page display operation, at least part of first page content of the media content generation page, and associatively displaying at least part of second page content of information display page, the information display page displaying a predetermined media content set, and the predetermined media content set being a set of at least part of second media content that has been posted.

In a second aspect, the embodiments of the present disclosure further provide an apparatus for displaying page content, including:
an operation receiving module, configured to receive a predetermined page display operation for a media content generation page, the media content generation page being configured to obtain and/or generate first media content;
a content display module, configured to display, in response to the predetermined page display operation, at least part of first page content of the media content generation page, and associatively display at least part of second page content of information display page, the information display page displaying a predetermined media content set, and the predetermined media content set being a set of at least part of second media content that has been posted.

In a third aspect, the embodiments of the present disclosure further provide an electronic device, including:
one or more processors;
a memory, configured to store one or more programs.

The one or more programs, when executed by the one or more processors, cause the one or more processors to perform the method for displaying page content according to the embodiments of the present disclosure.

In a fourth aspect, the embodiments of the present disclosure further provide a computer readable storage medium having a computer program stored thereon. The program, when executed by a processor, implements the method for displaying page content according to the embodiments of the present disclosure.

### BRIEF DESCRIPTION OF DRAWINGS

The above and other features, advantages, and aspects of the various embodiments in the present disclosure will become more apparent from the following detailed description taken in combination with the accompanying drawings. Throughout the drawings, the same or similar reference numbers refer to the same or similar elements. It should be understood that the drawings are schematic and that the components and elements are not necessarily drawn to scale.
Fig. 1 is a schematic flowchart of a method for displaying page content according to an embodiment of the present disclosure;
Fig. 2 is a schematic diagram for displaying the page content according to an embodiment of the present disclosure;
Fig. 3 is a schematic diagram for displaying another page content according to an embodiment of the present disclosure;
Fig. 4 is a schematic diagram for displaying an information display page according to an embodiment of the present disclosure;
Fig. 5 is a schematic flowchart of a method for displaying another page content according to an embodiment of the present disclosure;
Fig. 6 is a schematic diagram for displaying further page content according to an embodiment of the present disclosure;
Fig. 7 is a structural block diagram of an apparatus for displaying page content according to an embodiment of the present disclosure;
Fig. 8 is a schematic structural diagram of an electronic device according to an embodiment of the present disclosure.

### DETAILED DESCRIPTION

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

**It** should be understood that steps described in method implementations of the present disclosure may be performed in different orders and/or in parallel. Furthermore, the embodiment of the method may include additional steps and/or omit performing the illustrated steps. The scope of the present disclosure is not limited in this regard.

As used herein, the term "include" and its variations would be appreciated as open-ended inclusions, that is, "include but not limited to". The term "based on" would be appreciated as "at least partially based on". The term "an embodiment" would be appreciated as "at least one embodiment". The term "another embodiment" would be appreciated as "at least one other embodiment". The term "some embodiments" would be appreciated as "at least some embodiments". Relevant definitions of other terms may be described in the following description.

**It** should be noted that concepts such as "first" and "second" mentioned in the present disclosure are only used to distinguish different apparatuses, modules, or units, and are not used to limit the order or interdependence of functions performed by these apparatuses, modules, or units.

**It** should be noted that modifications of "a" and "a plurality of" mentioned in the present disclosure are illustrative rather than restrictive, and those skilled in the art should understand that the modifications should be understood as "one or more" unless otherwise clearly indicated in the context.

The names of messages or information exchanged between a plurality of devices in the embodiment of the present disclosure are merely for illustrative purposes and are not intended to limit the scope of such messages or information.

It would be appreciated that before the technical solution disclosed in the embodiments in the present disclosure is used, users should be informed of the type, the scope of use, the use scenario, etc. of the personal information involved in the present disclosure in an appropriate manner and in accordance with relevant laws and regulations, and the authorization of the relevant users may be obtained.

For example, in response to an active request being received from a user, a prompt message is sent to the user to explicitly prompt the user that the operation requested by the user would need acquisition and use of personal information of the user. As such, according to prompt information, users may choose whether to provide personal information to the software or hardware, such as an electronic device, application, server or storage medium, that performs the operations of the technical solution in the present disclosure.

As an optional but non-limiting implementation, in response to the active request being received from the user, the prompt information may be sent to the user via, for example, a pop-up window in which the prompt information may be presented in text. In addition, the pop-up window may also contain selection controls configured for the user to choose "agree" or "disagree" to provide the personal information to the electronic device.

It would be appreciated that the above process of notification and acquisition of user authorization is only exemplary and do not limit the implementations in the present disclosure. Other methods that meet relevant laws and regulations may also be applied to the implementations in the present disclosure.

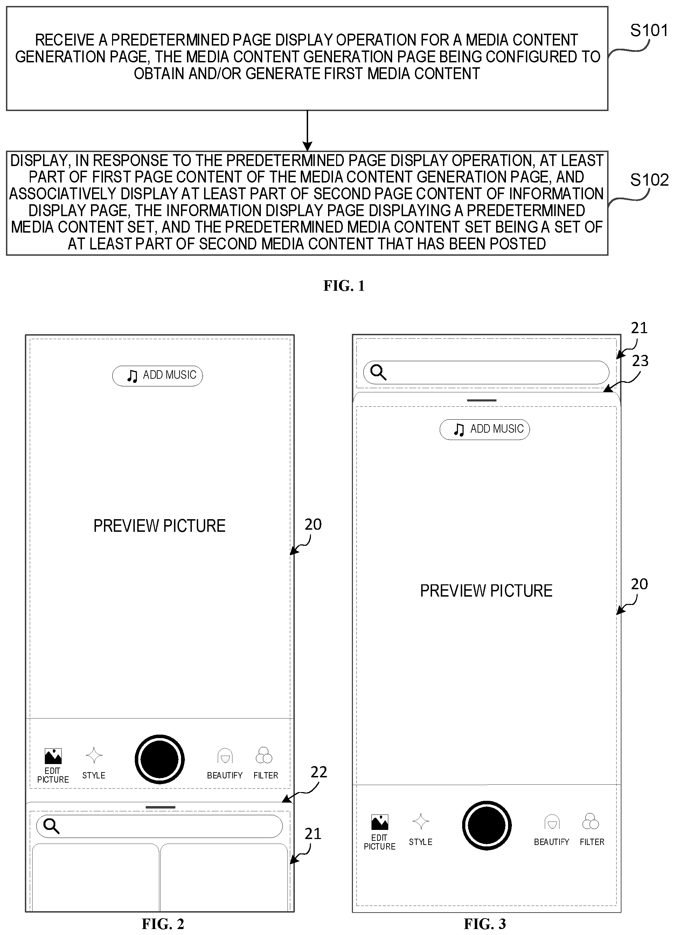

Fig. 1 is a schematic flowchart of a method for displaying page content according to an embodiment of the present disclosure. The method may be performed by an apparatus for displaying page content, where the apparatus may be implemented by software and/or hardware, and may be configured in an electronic device. Typically, the apparatus may be configured in a mobile phone or a tablet computer. The method for displaying page content provided by the embodiments of the present disclosure is suitable for the scene of associatively displaying the page content of a media content generation page and the page content of an information display page of media content. As shown in Fig. 1, the method for displaying page content provided in the embodiment may include:

S101: receive a predetermined page display operation for a media content generation page, the media content generation page being configured to obtain and/or generate first media content.

In the embodiment, the media content generation page may be considered as a page for obtaining and/or generating a media content image. Alternatively, the media content generation page includes a capturing page. The following provides the description by taking the media content generation page as an example of the capturing page. The first media content may be media content captured in the media content generation page and to be posted or saved. If the media content generation page is a capturing page, the media content generation page may include a viewfinder, in which a picture dynamically collected by the current camera or a picture that has been captured may be displayed. The first media content may be media content captured in the capturing page. The predetermined page display operation may be a predetermined operation for indicating the display of the media content generation page, and this embodiment does not limit the predetermined operation. For example, the predetermined page display operation may include an operation of switching from another page to the media content generation page. Alternatively, if the media content generation page is the first page of the current application, the predetermined page display operation may include a startup operation for the current application.

In this embodiment, the user may perform the predetermined page display operation for the media content generation page. Correspondingly, the current application may receive the predetermined page display operation performed by the user.

S102: display, in response to the predetermined page display operation, at least part of first page content of the media content generation page, and associatively display at least part of second page content of information display page, the information display page displaying a predetermined media content set, and the predetermined media content set being a set of at least part of second media content that has been posted.

In this embodiment, the first page content may be understood as page content of the media content generation page. The second page content may be understood as page content of the information display page. The information display page may be a page for displaying a predetermined media content set, for example, a page for displaying media content information of media content in a predetermined media content set. The predetermined media content set may be a certain media content set of posted media content, such as a set of recommended media content. The predetermined media content set may include one or more pieces of media content posted by the current user in the current application, or may include one or more pieces of media content posted by other users except the current user in the current application. The second media content may be media content that has been posted in the current application.

Specifically, when the predetermined page display operation for the media content generation page is received, at least part of the first page 20 of the media content generation page may be displayed, and at least part of the second page content 21 of the information display page may be associatively displayed, as shown in Fig. 2 and Fig. 3.

In this embodiment, the specific content of at least part of the second page content associatively displayed is not limited. For example, without considering the second page content that is most recently viewed by the user before the predetermined page display operation is performed this time, the predetermined second page content in the information display page is associatively displayed when the predetermined page display operation is received, such as associatively displaying the page content displayed in the predetermined page area when the information display page is initially presented. Alternatively, with considering the second page content that is most recently viewed by the user before the predetermined page display operation being performed this time, the second page content that is most recently viewed by the user is associatively displayed when the predetermined page display operation is received, such as associatively displaying the second media content that is most recently viewed by the user, so that the user continues to view the second page content on this basis. In this case, alternatively, the media content generation page includes the capturing page; and/or, at least part of the second page content is the predetermined second page content, or the second page content that is most recently viewed by the user before the predetermined page display operation is received.

In this embodiment, at least part of the second page content associatively displayed is not limited. Alternatively, at least part of the second page content includes a search region and/or at least one second media content. For example, the search region of the information display page and at least one second media content in the information display page may be associatively displayed.

In this embodiment, the approach of displaying at least part of the first page content and associatively displaying at least part of the second page content is not limited, so that the at least part of the first page and the at least part of the second page content may be displayed at the same or different interface levels. Alternatively, the at least part of the first page content and the at least part of the second page content are displayed at different interface levels.

In some implementations, displaying the at least part of first page content of the media content generation page and associatively displaying the at least part of second page content of the information display page includes: presenting the media content generation page, displaying first page content in the media content generation page, and displaying at least part of the second page content of the information display page on an upper layer of the media content generation page.

In the foregoing implementation, an interface level of at least a part of the displayed second page content may be higher than an interface level of the first page content. In this case, when the predetermined page display operation for the media content generation page is received, the media content generation page may be displayed. The first page content is displayed in the media content generation page, and at least part of the second page content of the information display page is displayed on the upper layer of the media content generation page, as shown in Fig. 2.

In this embodiment, after displaying at least part of the second page content of the information display page on the upper layer of the media content generation page, the user may be further supported to switch the currently presented page from the media content generation page to the information display page, so as to view more second page content in the information display page. In this case, alternatively, the method further includes: after displaying at least part of the second page content of the information display page on the upper layer of the media content generation page, in response to a first page switching operation, switching a current page from the media content generation page to the information display page, and displaying the second page content in the information display page.

The first page switching operation may be a trigger for indicating the switch of the current page from the media content generation page to the information display page, for example, swiping along a set direction or triggering a control. Alternatively, at least part of the second page content is displayed within the information display floating layer, and the first page switching operation includes swiping along a third direction for the information display floating layer. For example, the second page content of the information display page may be displayed in the information display floating layer in a floating layer manner. In this case, the user may perform the first page switching operation by performing the swiping along the third direction for the information display floating layer. Here, the information display floating layer may be considered as a floating layer for displaying at least part of the second page content described above. The third direction may be flexibly set as needed. For example, when the information display floating layer is displayed at the bottom of the media content generation page, the third direction may be an upward direction.

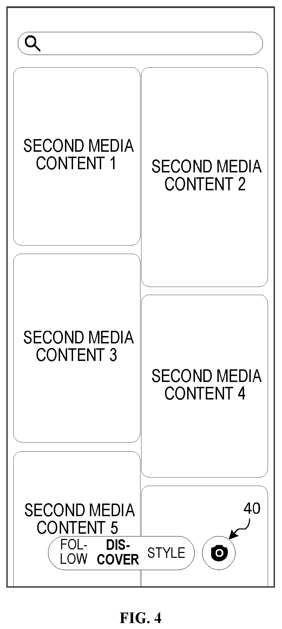

Specifically, when the first page switching operation is received, for example, when it is detected that the current user swipes upwards within the information display floating layer 22 (as shown in Fig. 2), the current page may be switched from the media content display page to the information display page, and the second page content may be displayed in the information display page, as shown in Fig. 4.

In this embodiment, after the current page is switched from the media content generation page to the information display page based on the first page switching operation of the user, the user may be further supported to re-switch the current page back to the media content generation page. In this case, alternatively, the method further includes: after switching the current page from the media content generation page to the information display page, in response to a second page switching operation, switching the current page from the information display page to the media content generation page, displaying the first page content in the media content generation page, and displaying at least part of the second page content of the information display page on the upper layer of the media content generation page.

The second page switching operation may be a trigger for indicating the switch of the current page from the media content generation page to the information display page, for example, swiping along a predetermined direction or triggering a control. For example, the second page switching operation may include a predetermined swiping operation and/or an operation of triggering the set control displayed in the information display page. The predetermined swiping operation may include, for example, an operation that swipes downwards on the top of the information display page and/or an operation that continues to swipe downwards after the first media content is displayed in the media content display page when swiping downward.

For example, when the second page switching operation is received, for example, when it is detected that the user performs the predetermined swiping operation in the information display page or triggers the set control in the information display page, the current page may be re-switched back from the information display page to the media content generation page, and at least a part of the second page content in the information display page may continue to be displayed in the upper layer of the media content generation page.

In the foregoing implementation, an approach of displaying at least a part of the second page content may be set flexibly. For example, the information display floating layer may be redisplayed on the upper layer of the media content generation page, and at least part of the second page content of the information display page may be displayed in the information display floating layer. In this case, alternatively, displaying at least part of the second page content of the information display page on the upper layer of the media content generation page includes: redisplaying the information display floating layer, and displaying at least part of the second page content of the information display page within the information display floating layer.

In some other embodiments, displaying at least part of first page content of the media content generation page and associatively displaying at least part of second page content of the information display page includes: presenting the information display page, displaying second page content in the information display page, and displaying at least part of the first page content of the media content generation page on an upper layer of the information display page.

In the foregoing implementation, an interface level of at least part of the first page content that is displayed may be higher than an interface level of the second page content. In this case, when the predetermined page display operation for the media content generation page is received, the information display page may be displayed, the second page content is displayed in the information display page, and at least part of the first page content of the media content generation page is displayed on the upper layer of the information display page, as shown in Fig. 3.

In the above embodiment, when the display information display page is displayed in response to the predetermined page display operation of the user for the media content generation page, at least part of the first page content of the media content generation page may be displayed on the upper layer of the information display page while the display information display page is displayed. Alternatively, when a display duration of the information display page reaches a second predetermined duration, at least part of the first page content of the media content generation page may be additionally displayed on the upper layer of the information display page, so as to prompt the user to switch to view the information display page. In this case, displaying at least part of the first page content of the media content generation page on the upper layer of the information display page may include: additionally displaying at least part of the first page content of the media content generation page on the upper layer of the information display page, in accordance with a presentation duration of the information display page reaching a second predetermined duration. Here, the second predetermined duration may be set as required, and the specific value thereof is not limited in this embodiment.

In this embodiment, as shown in Fig. 4, when the media content generation page is displayed, the predetermined control 40 may be further displayed in the media content generation page, so that the user indicates the current application to display the page content of the media content generation page by triggering the predetermined control 40. In this case, alternatively, the method for displaying page content provided in this embodiment further includes: displaying, on the information display page, a predetermined control 40 for triggering the presentation of the media content generation page. The predetermined control 40 may be the same as or different from the set control in the information display page for performing the second page switching operation, which may be specifically set as required.

In this embodiment, the page content of the media content generation page may be displayed in response to the trigger of the user for the predetermined control. The approach of displaying the page content of the media content generation page is not limited. For example, a media content generation floating layer may be displayed, with an approach of floating layer, on an upper layer of the information display page, and at least part of the page content in the media content generation page may be displayed in the media content generation floating layer. The media content generation page may also be displayed, and the page content may be displayed in the media content generation page. The information display page may be converted into the information display floating layer, and the information display floating layer may be displayed on the upper layer of the media content generation page. In this case, the method for displaying page content provided in this embodiment may further include: presenting the media content generation floating layer on the information display page, in response to a trigger for the predetermined control; or converting the information display page into a floating layer presented on the media content generation page, in response to the trigger for the predetermined control.

According to the page content display method provided in this embodiment, the predetermined page display operation for a media content generation page is received, the media content generation page being configured to obtain and/or generate first media content. In response to the predetermined page display operation, at least part of first page content of the media content generation page is displayed, and at least part of second page content of information display page is associatively displayed. The information display page displays a predetermined media content set, and the predetermined media content set is a set of at least part of second media content that has been posted. In the present embodiment, by using the technical solution described above, at least part of the page content of the information display page is associatively displayed when the page content of the media content generation page is displayed, thereby enriching the content to be displayed when the page content of the media content generation page is displayed, and simplifying the operation that is required for the user to view the page content of the information display page.

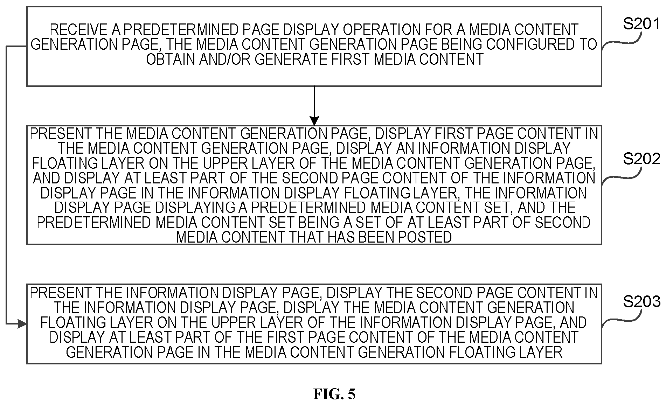

Fig. 5 is a schematic flowchart of another page content display method according to an embodiment of the present disclosure. The solution in this embodiment may be combined with one or more alternative solutions in the foregoing embodiments. Alternatively, displaying at least part of the second page content of the information display page on the upper layer of the media content generation page includes: displaying an information display floating layer on the upper layer of the media content generation page, and displaying at least part of the second page content of the information display page in the information display floating layer.

Alternatively, displaying at least part of the first page content of the media content generation page on the upper layer of the information display page includes: displaying a media content generation floating layer on the upper layer of the information display page, and displaying at least part of the first page content of the media content generation page in the media content generation floating layer.

Correspondingly, as shown in Fig. 5, the method for displaying page content provided in this embodiment may include the following steps.

S201: receive a predetermined page display operation for a media content generation page, perform S202 or S203, the media content generation page being configured to obtain and/or generate first media content.

S202: present the media content generation page, display first page content in the media content generation page, display an information display floating layer on the upper layer of the media content generation page, and display at least part of the second page content of the information display page in the information display floating layer, the information display page displaying a predetermined media content set, and the predetermined media content set being a set of at least part of second media content that has been posted.

In some embodiments, the information display floating layer may be considered as a floating layer for displaying at least part of the second page content of the information display page. The information display floating layer may be displayed on the upper layer of the media content generation page. Alternatively, an area of the information display floating layer may be less than an area of the media content generation page and/or an area of the information display page.

In this embodiment, at least part of the second page content of the information display page may be displayed on the upper layer of the media content generation page with the approach of the information display floating layer.

Specifically, when the predetermined page display operation for the media content generation page is received, the media content generation page may be presented in response to the predetermined page display operation. The first page content 20 is displayed in the media content generation page, and the information display floating layer 22 is displayed on the upper layer of the media content generation page (only a part of the second page content 22 that is displayed in the media content generation page is shown in Fig. 2), and at least part of the second page content 21 of the information display page is displayed in the information display floating layer 22, as shown in Fig. 2.

In some embodiments, the method further includes: after displaying at least part of the second page content of the information display page in the information display floating layer, adjusting a size of the information display floating layer and/or switching to present the information display page, in response to a presentation adjustment for the information display floating layer, and adjusting the second page content displayed in the information display floating layer, in response to the presentation adjustment for the information display floating layer.

In some implementations, the display adjustment may be understood as an operation for adjusting the displayed content, such as a trigger for adjusting a size of the information display floating layer, a trigger for adjusting a currently displayed page, and/or a trigger for adjusting the second page content displayed in the information display floating layer. The approach of performing the display adjustment is not limited, and the following description takes a case where the information adjustment is a swiping operation as an example.

In the foregoing implementation, the user may be supported to adjust a size of the information display floating layer, switch to present the information display page, and/or adjust the second page content displayed in the information display floating layer through the display adjustment, so as to meet different viewing requirements of the user for the second page content.

As an example, when the display adjustment for the information display floating layer is received, the size of the information display floating layer may be adjusted, such as increasing or reducing the size of the information display floating layer.

In another example, when the display adjustment for the information display floating layer is received, the information display page may be switched to be presented. For example, the current page may be switched from the media content generation page to the information display page, and the second page content may be displayed in the information display page.

In a further example, when the display adjustment for the information display floating layer is received, the second page content displayed in the information display floating layer may be adjusted, such as switching the second page content displayed in the information display floating layer, or increasing or decreasing the second page content displayed in the information display floating layer.

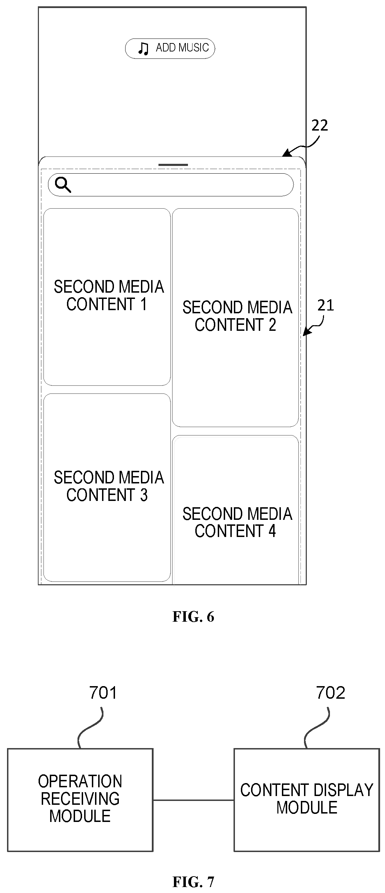

In the above embodiment, when the display adjustment for indicating the increase of the size of the information display floating layer 22 is received, in addition to increasing the size of the information display floating layer 22, the second page content 21 displayed in the information display floating layer 22 may be further increased. For example, the information display floating layer 22 may be increased from the first size to the second size, and the second page content 21 displayed in the floating layer 22 may be increased according to the second size, for example, the information display floating layer 22 is adjusted from the state shown in Fig. 2 to the state shown in Fig. 6.

In this case, alternatively, adjusting the size of the information display floating layer in response to a size adjustment for the information display floating layer includes: increasing a size of the information display floating layer from a first size to a second size, in response to swiping along a first direction for the information display floating layer; and adjusting the second page content displayed in the information display floating layer include: increasing the second page content displayed in the information display floating layer according to the second size.

In some embodiments, the display adjustment for indicating the increase of the size of the floating layer 22 may include swiping along the first direction for the information display floating layer, and the first direction may be set as needed. For example, the first direction may be upward. In this case, when the user swipes upward at any position or at a predetermined position (for example, a top region of the information display floating layer) in the information display floating layer, the size of the information display floating layer may be increased, and the second page content displayed in the information display floating layer may be increased. The second size may be predetermined, or may correspond to a swiping distance of the user in the first direction.

In the above embodiment, when the display adjustment for indicating the reducing of the size of the information display floating layer 22 is received, in addition to reducing the size of the information display floating layer 22, the second page content 21 displayed in the information display floating layer 22 may be further decreased. For example, the information display floating layer 22 may be reduced from the second size to the first size, and the second page content 21 displayed in the floating layer 22 may be decreased according to the first size, for example, the information display floating layer 22 is adjusted from the state shown in Fig. 6 to the state shown in Fig. 2.

In this case, alternatively, adjusting the size of the information display floating layer in response to the size adjustment for the information display floating layer includes: reducing a size of the information display floating layer from a second size to a first size, in response to swiping along a second direction for the information display floating layer; and adjusting the second page content displayed in the information display floating layer include: reducing the second page content displayed in the information display floating layer according to the first size.

In embodiments, the display adjustment for indicating the reducing of the size of the floating layer 22 may include swiping along the second direction for the information display floating layer, and the second direction may be set as needed. As an example, the second direction may be opposite to the first direction. For example, when the first direction is an upward direction, the second direction may be a downward direction. In this case, when the user swipes downward at any position or at a predetermined position (for example, a top region of the information display floating layer) in the information display floating layer, the size of the information display floating layer may be reduced, and the second page content displayed in the information display floating layer may be decreased. The first size may be predetermined, or may correspond to a swiping distance of the user in the second direction.

In the present embodiment, when a display adjustment for indicating to switch to present the information display page is received, the information display page may also be switched to be presented. For example, the information display floating layer and the media content generation page may be canceled from being displayed, and the information display page may be displayed. In this case, alternatively, switching to present the information display page includes: canceling the presentation of the information display floating layer, and presenting the information display page.

In this embodiment, the display adjustment for indicating to switch to present the information display page may be swiping along a predetermined direction. The predetermined direction may be the same as or different from the first direction or the second direction. When the predetermined direction is the same direction as the first direction or the second direction, whether the display adjustment is configured for indicating to adjust the size of the information display floating layer or for indicating to switch to present the information display page may be determined based on the swiping distance of the user and/or the size of the information display floating layer before swiping. For example, if the swiping distance of the user in the predetermined direction is less than or equal to the predetermined distance, the size of the information display floating layer may be adjusted in response to the display adjustment; and if the swiping distance of the user in the predetermined direction is greater than the predetermined distance, the information display page is switched to be presented in response to the display adjustment. Alternatively, if the size of the information display floating layer before swiping is less than or equal to a predetermined size, the size of the information display floating layer is adjusted in response to the display adjustment; and if the size of the information display floating layer before swiping is greater than the predetermined size, the information display page is switched to be presented in response to the display adjustment. The predetermined distance and the predetermined size may both be set as needed. Alternatively, the predetermined size may be greater than or equal to the first size and less than the second size.

In an alternative implementation, the first direction and the predetermined direction may be upward, the second direction may be downward, and the first size and the second size may be preset sizes.

Therefore, when the information display floating layer 22 is displayed on the upper layer of the media content generation page in response to the predetermined page display operation, the information display floating layer 22 may be displayed as the first size, as shown in Fig. 2.

When it is detected that the user swipes upward for the information display floating layer 22, the information display floating layer 22 may be increased from the first size to the second size, and the second page content 21 displayed in the information display floating layer 22 may be increased, as shown in Fig. 6.

When the information display floating layer 22 is displayed with the second size, if it is detected that the user swipes upward again for the information display floating layer 22, the current page may be switched from the media content generation page to the information display page, and the second page content 21 may be displayed in the information display page, as shown in Fig. 4. And/or, if it is detected that the user swipes down for the information display floating layer 22, the information display floating layer 22 may be reduced from the second size to the first size, and the second page content 21 displayed in the information display floating layer 22 may be decreased.

After switching to present the information display page, if it is detected that the user swipes down in the information display page, for example, when it is detected that the user swipes down in the top region of the information display page, or when it is detected that the user triggers the predetermined control 40 displayed in the information display page, the current page may be switched from the information display page to the media content generation page, and the information display floating layer 22 is displayed on the upper layer of the media content generation page with the first size or the second size.

Therefore, the user may achieve adjustment of the presented content by a simple swiping, thereby enabling to simplify the operation required for the user to view the page content of the information display page, and the operation required for switching the pages between the media content generation page and the information display page.

In some implementations, when the information display floating layer is displayed on the upper layer of the media content generation page in response to the predetermined page display operation for the media content generation page, the information display floating layer may be controlled to zoom, so as to prompt the user to adjust the size of the information display floating layer.

In this case, alternatively, displaying the information display floating layer on the upper layer of the media content generation page includes: displaying, with a first size, the information display floating layer on the upper layer of the media content generation page; controlling the information display floating layer to be adjusted from the first size to the second size, in accordance with a display duration of the information display floating layer reaching a first predetermined duration; controlling the information display floating layer to be restored from the second size to the first size; and maintaining to display, with the first size, the information display floating layer on the upper layer of the media content generation page.

For example, when the predetermined page display operation for the media content generation page is received, the media content generation page may be displayed, and the information display floating layer may be displayed, with the first size, on the upper layer of the media content generation page. If the current condition meets a predetermined condition for controlling the information display floating layer to zoom, the information display floating layer may be controlled to be increased from the first size to the second size when a display duration of the information display floating layer reaches a first predetermined duration. After the information display floating layer is increased to the second size, the information display floating layer may be controlled to be restored from the second size to the first size, and may be maintained to be displayed, with the first size, on the upper layer of the media content generation page, until the display adjustment for the information display floating layer is received from the user.

In some embodiments, both the predetermined condition and the first predetermined duration may be set as needed. For example, the predetermined condition may be set in a way that the predetermined page display operation currently performed by the user is within the first m predetermined page display operations performed by the user after the current application is installed or started this time, and/or the number of times the information display floating layer is controlled to be zoomed in a current zoom period is less than or equal to n times. The values of m and n are positive integers, and the current zoom period may be, for example, the current day, the current week, or the current month, and may be set as needed.

S203: display the information display page, display the second page content in the information display page, display the media content generation floating layer on the upper layer of the information display page, and display at least part of the first page content of the media content generation page in the media content generation floating layer.

In this embodiment, the media content generation floating layer may be considered as a floating layer for displaying at least part of the second page content of the media content generation page, and the media content generation floating layer may be displayed on the upper layer of the information display page. Alternatively, an area of the media content generation floating layer may be less than an area of the information display page and/or the media content generation page.

In this embodiment, at least part of the second page content of the media content generation page may also be displayed on the upper layer of the information display page by using the media content generation floating layer.

Specifically, when the predetermined page display operation for the media content generation page is received, the display information display page may be displayed in response to the predetermined page display operation. The second page content 21 may be displayed in the information display page (only a part of the second page content 21 displayed in the information display page is shown in Fig. 3), the information display floating layer 23 may be displayed on the upper layer of the information display page, and at least part of the first page content 20 of the media content generation page may be displayed in the information display floating layer 23, as shown in Fig. 3.

In this embodiment, after the media content generation floating layer is displayed on the upper layer of the information display page, it may be indicated that the user indicates, by a cancellation of the display, the current application to cancel the display of the media content generation floating layer, so that the user may view the second page content displayed on the lower layer of the media content generation floating layer. For example, when the cancellation of the display for the first page content is received, the display of the first page content may be canceled, and the information display page may be maintained to be displayed.

In this case, alternatively, the method further includes: after displaying at least part of the first page content of the media content generation page on the upper layer of the information display page: canceling the display of the first page content and maintaining to display the information display page, in response to a cancellation of the display for the first page content.

In this embodiment, the cancellation of the display may be a trigger for indicating to cancel the display of the first page content displayed on the upper layer of the information display page, for example, a trigger for indicating to cancel the display of the media content generation floating layer. The approach for performing the cancellation of the display is not limited, and alternatively, the cancellation of the display for the first page content includes swiping along a fourth direction for the media content generation floating layer and/or clicking on the media content generation floating layer. In this case, the user may indicate the current application to cancel the display of the media content generation floating layer by swiping along the fourth direction for the media content generation floating layer and/or clicking on the media content generation floating layer. The fourth direction may be set as required, for example, the fourth direction may be downward.

For example, after the cancellation of the display is performed, the interface shown in Fig. 4 is switched to. For example, after the downward swiping is performed on the media content generation floating layer, a transition effect in which the media content generation floating layer is retracted and shrunk to a predetermined control 40 (for example, a capturing control) is displayed.

In this embodiment, after the display of the first page content displayed on the upper layer of the information display page is canceled in response to the cancellation of the display of the user, the user is further supported to indicate, by the display operation for the first page content, the current application program to redisplay at least part of the first page content of the media content generation page on the upper layer of the information display page. In this case, alternatively, the method further includes: after canceling the display of the first page content, redisplaying at least part of the first page content of the media content generation page on the media content generation floating layer on the information display page, in response to a display operation for the first page content.

In this embodiment, the display operation for the first page content may be a trigger for indicating to redisplay at least part of the first page content of the media content generation page on the upper layer of the information display page, for example, triggering the predetermined control 40 displayed in the information display page. For example, the predetermined control 40 in Fig. 4 is triggered, and a presentation effect in which the media content generation floating layer is expanded from the predetermined control 40 is displayed.

For example, when the display operation for the first page content is received, for example, when it is detected that the user triggers the predetermined control displayed in the information display page, the media content generation floating layer may be redisplayed on the upper layer of the information display page, and at least part of the first page content of the media content generation page may be displayed in the media content generation floating layer.

According to a method, an apparatus, an electronic device and a storage medium for displaying page content provided by the embodiments of disclosure, a predetermined page display operation for a media content generation page is received, the media content generation page being configured to obtain and/or generate first media content. In response to the predetermined page display operation, at least part of first page content of the media content generation page is displayed, and at least part of second page content of information display page is associatively displayed. The information display page displays a predetermined media content set, and the predetermined media content set is a set of at least part of second media content that has been posted. In the embodiments of the disclosure, by using the technical solution described above, at least part of the page content of the information display page is associatively displayed when the page content of the media content generation page is displayed, thereby enriching the content to be displayed when the page content of the media content generation page is displayed, and simplifying the operation that is required for the user to view the page content of the information display page.

The method for displaying page content provided in the embodiments may not only enrich the content to be displayed when displaying the page content of the media content generation page, but also may enrich the associative display approach of at least part of second page content of the information display page that is associatively displayed with the first page content of the media content generation page.

Fig. 7 is a structural block diagram of an apparatus for displaying page content according to an embodiment of the present disclosure. The apparatus may be implemented by software and/or hardware, and may be configured in an electronic device, and is typically configured in a mobile phone or a tablet computer. The apparatus may associatively display the page content of a media content generation page and the page content of an information display page of media content by performing the method for displaying page content. As shown in Fig. 7, the apparatus for displaying page content provided in this embodiment may include an operation receiving module 701 and a content display module 702, where
an operation receiving module 701, configured to receive a predetermined page display operation for a media content generation page, the media content generation page being configured to obtain and/or generate first media content;
a content display module 702, configured to display, in response to the predetermined page display operation, at least part of first page content of the media content generation page, and associatively display at least part of second page content of information display page, the information display page displaying a predetermined media content set, and the predetermined media content set being a set of at least part of second media content that has been posted.

According to an apparatus for displaying page content provided by the embodiments, a predetermined page display operation for a media content generation page is received by the operation receiving module, the media content generation page being configured to obtain and/or generate first media content. In response to the predetermined page display operation, by the content display module, at least part of first page content of the media content generation page is displayed, and at least part of second page content of information display page is associatively displayed. The information display page displays a predetermined media content set, and the predetermined media content set is a set of at least part of second media content that has been posted. In the embodiments, by using the technical solution described above, at least part of the page content of the information display page is associatively displayed when the page content of the media content generation page is displayed, thereby enriching the content to be displayed when the page content of the media content generation page is displayed, and simplifying the operation that is required for the user to view the page content of the information display page.

In the above solution, at least part of the first page content and at least part of the second page content may be displayed at different interface levels.

In the foregoing solution, the content display module 702 may include: a first display unit, configured to present the media content generation page, display first page content in the media content generation page, and display at least part of the second page content of the information display page on an upper layer of the media content generation page; or a second display unit, configured to present the information display page, display second page content in the information display page, and display at least part of the first page content of the media content generation page on an upper layer of the information display page.

In the foregoing solution, the first display unit may be configured to: display an information display floating layer on the upper layer of the media content generation page, and display at least part of the second page content of the information display page in the information display floating layer.

Further, the apparatus for displaying page content provided in this embodiment may further include: a first presentation adjustment module, configured to, after displaying at least part of the second page content of the information display page in the information display floating layer, adjust a size of the information display floating layer and/or switch to present the information display page, in response to a presentation adjustment for the information display floating layer; and a second presentation adjustment module configured to, after displaying at least part of the second page content of the information display page in the information display floating layer, adjust the second page content displayed in the information display floating layer, in response to the presentation adjustment for the information display floating layer.

In the above solution, the first presentation adjustment module may be configured to: increase a size of the information display floating layer from a first size to a second size, in response to swiping along a first direction for the information display floating layer. The second presentation adjustment module may be configured to increase the second page content displayed in the information display floating layer according to the second size.

In the above solution, the first presentation adjustment module may be configured to reduce a size of the information display floating layer from a second size to a first size, in response to swiping along a second direction for the information display floating layer; and the second presentation adjustment module may be configured to reduce the second page content displayed in the information display floating layer according to the first size.

In the above solution, the first presentation adjustment module may be configured to cancel the presentation of the information display floating layer, and present the information display page.

In the foregoing solution, the first display unit may be configured to: display, with a first size, the information display floating layer on the upper layer of the media content generation page; control the information display floating layer to be adjusted from the first size to the second size, in accordance with a display duration of the information display floating layer reaching a first predetermined duration; control the information display floating layer to be restored from the second size to the first size; and maintain to display, with the first size, the information display floating layer on the upper layer of the media content generation page.

Further, the apparatus for displaying page content provided in this embodiment may further include: a first page switching module, configured to, after displaying at least part of the second page content of the information display page on the upper layer of the media content generation page, switch, in response to a first page switching operation, a current page from the media content generation page to the information display page, and display the second page content in the information display page.

Further, the apparatus for displaying page content provided in this embodiment may further include: a second page switching module, configured to, after switching the current page from the media content generation page to the information display page, switch, in response to a second page switching operation, the current page from the information display page to the media content generation page, display the first page content in the media content generation page, and display at least part of the second page content of the information display page on the upper layer of the media content generation page.

In the foregoing solution, at least part of the second page content may be displayed within the information display floating layer, and the first page switching operation may include swiping along a third direction for the information display floating layer.

In the above solution, the second page switching module may be configured to: redisplay the information display floating layer, and display at least part of the second page content of the information display page within the information display floating layer.

In the above solution, the second display unit may be configured to: additionally display at least part of the first page content of the media content generation page on the upper layer of the information display page, in accordance with a presentation duration of the information display page reaching a second predetermined duration.

In the foregoing solution, the second display unit may be configured to: display a media content generation floating layer on the upper layer of the information display page, and display at least part of the first page content of the media content generation page in the media content generation floating layer.

Further, the apparatus for displaying page content provided in this embodiment may further include: a cancellation display module, configured to, after displaying at least part of the first page content of the media content generation page on the upper layer of the information display page, cancel the display of the first page content and maintain to display the information display page, in response to a cancellation of the display for the first page content.

In the above solution, the cancellation of the display for the first page content includes swiping along a fourth direction for the media content generation floating layer and/or clicking on the media content generation floating layer.

Further, the apparatus for displaying page content provided in this embodiment may further include: a redisplay module, configured to, after canceling the display of the first page content, redisplay at least part of the first page content of the media content generation page on the media content generation floating layer on the information display page, in response to a display operation for the first page content.

Further, the apparatus for displaying page content provided in this embodiment may further include: a control display module, configured to display, on the information display page, a predetermined control for triggering the presentation of the media content generation page.

Further, the apparatus for displaying page content provided in this embodiment may further include: a floating layer display module, configured to present the media content generation floating layer on the information display page, in response to a trigger for the predetermined control; or convert the information display page into a floating layer presented on the media content generation page, in response to the trigger for the predetermined control.

In the foregoing solution, the media content generation page may include a capturing page; and/or the at least part of the second page content may be a predetermined second page content or a second page content that is most recently viewed by a user before the predetermined page display operation is received.

In the above solution, the at least part of the second page content may include a search region and/or at least one second media content.

The apparatus for displaying page content provided by the embodiments of the present disclosure may perform the method for displaying page content provided by any embodiment of the present disclosure, and has functional modules and beneficial effects corresponding to the method for displaying page content. For technical details not described in detail in this embodiment, reference may be made to the method for displaying page content provided by any embodiment of the present disclosure.

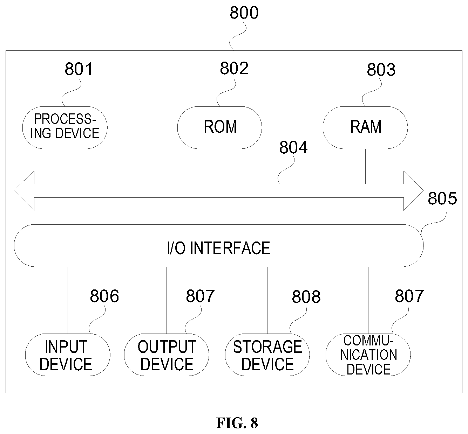

Fig. 8 is a schematic structural diagram of an electronic device according to an embodiment of the present disclosure. Referring to Fig. 8, Fig. 8 illustrates a schematic structural diagram of an electronic device 800(such as a terminal device) suitable for implementing the embodiments in the present disclosure. The terminal device in the embodiments of the present may include, but is not limited to, a mobile terminal such as a mobile phone, a notebook computer, a digital broadcast receiver, a personal digital assistant (PDA), a portable Android device (PAD), a portable media player (PMP), an in-vehicle terminal (for example, an in-vehicle navigation terminal), as well as a fixed terminal such as a digital TV, a desktop computer, or the like. The electronic device shown in Fig. 8 is merely an example, and should not impose any limitation on the functions and usage scope of the embodiments in the present disclosure.

As shown in Fig. 8, the electronic device 800 may include a processing device 801 (for example, a central processing unit, a graphics processor, etc.), which may perform various appropriate actions and processing according to a program stored in a read only memory (ROM) 802 or a program loaded into a random access memory (RAM) 803 from a storage device 808. In the RAM 803, various programs and data required by the electronic device 800 are also stored. The processing device 801, the ROM 802, and the RAM 803 are connected to each other through a bus 804. An input/output (I/O) interface 805 is also connected to bus 804.

Generally, the following devices may be connected to the I/O interface 805: an input device 806 including, for example, a touch screen, a touch pad, a keyboard, a mouse, a camera, a microphone, an accelerometer, a gyroscope, and the like; an output device 809 including, for example, a liquid crystal display (LCD), a speaker, a vibrator, and the like; the storage device 808 including, for example, a magnetic tape, a hard disk, and the like; and a communication device 809. The communication device 809 may allow the electronic device 800 to communicate wirelessly or wired with other devices to exchange data. Although the electronic device 800 with various devices is shown in Fig. 8, it should be understood that it is not required to implement or have all illustrated devices. More or fewer devices may alternatively be implemented or provided.

In particular, according to embodiments in the present disclosure, the process described above with reference to the flowchart may be implemented as a computer software program. For example, the embodiments in the present disclosure include a computer program product including a computer program embodied on a non-transitory computer readable medium, the computer program including program code for performing the method shown in the flowchart. In such embodiments, the computer program may be downloaded and installed from the network through the communication device 809, or installed from the storage device 808, or from the ROM 802. When the computer program is executed by the processing device 801, the foregoing functions defined in the method of the embodiments in the present disclosure are performed.

It should be noted that the computer-readable medium described above may be a computer readable signal medium, a computer readable storage medium, or any combination thereof. The computer-readable storage medium may be, for example, but not limited to, an electrical, magnetic, optical, electromagnetic, infrared, or semiconductor system, device, or apparatus, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, device, or apparatus. In the present disclosure, a computer readable signal medium may include a data signal propagated in baseband or as part of a carrier, where the computer readable program code is carried. Such propagated data signals may take various forms including, but not limited to, electromagnetic signals, optical signals, or any suitable combination thereof. The computer readable signal medium may also be any computer readable medium other than a computer readable storage medium that may send, propagate, or transmit a program for use by or in connection with an instruction execution system, device, or apparatus. The program code embodied on the computer-readable medium may be transmitted with any suitable medium, including, but not limited to: wires, optical cables, radio frequency (RF), and the like, or any suitable combination thereof.

In some implementations, a client and a server may communicate with any currently known or future developed network protocol, such as Hyper Text Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The computer-readable medium described above may be included in the electronic device; or may be separately present without being assembled into the electronic device.

The computer readable medium carries one or more programs, and when the one or more programs are executed by the electronic device, the electronic device is caused to: receive a predetermined page display operation for a media content generation page, the media content generation page being configured to obtain and/or generate first media content; and display, in response to the predetermined page display operation, at least part of first page content of the media content generation page, and associatively display at least part of second page content of information display page, the information display page displaying a predetermined media content set, and the predetermined media content set being a set of at least part of second media content that has been posted.

The computer program code for performing the action of the present disclosure may be written in one or more programming languages or a combination thereof, including but not limited to object oriented programming languages, such as Java, Smalltalk, and C + +, as well as conventional procedural programming languages, such as the "C" language or similar programming languages. The program code may be executed entirely on a user computer, partially on a user computer, as a stand-alone software package, partially on a user computer, partially on a remote computer, or entirely on a remote computer or server. In the case of a remote computer, the remote computer may be connected to the user computer through any type of network, including a local area network (LAN) or a wide area network (WAN), or may be connected to an external computer (for example, via the Internet using an Internet service provider).

The flowcharts and block diagrams in the figures illustrate architecture, functionality, and operation of possible implementations of systems, methods, and computer program products according to various embodiments in the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order from that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments in the present disclosure may be implemented in software, or may be implemented in hardware. The names of the modules do not constitute limitations on the unit themselves.

The functions described above may be performed, at least in part, by one or more hardware logic components. For example of non-limiting, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, device, or apparatus. The machine-readable medium may be a machine-readable signal medium or a machine-readable storage medium. The machine-readable medium may include, but is not limited to, electronic, magnetic, optical, electromagnetic, infrared, or semiconductor systems, devices, or apparatus, or any suitable combination thereof. More specific examples of machine-readable storage media may include electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, Example 1 provides a method for displaying page content, including:
receiving a predetermined page display operation for a media content generation page, the media content generation page being configured to obtain and/or generate first media content; and
displaying, in response to the predetermined page display operation, at least part of first page content of the media content generation page, and associatively displaying at least part of second page content of information display page, the information display page displaying a predetermined media content set, and the predetermined media content set being a set of at least part of second media content that has been posted.

According to one or more embodiments of the present disclosure, Example 2 is the method according to Example 1, at least part of the first page content and at least part of the second page content are displayed at different interface levels.

According to one or more embodiments of the present disclosure, Example 3 is the method according to Example 2, displaying at least part of first page content of the media content generation page and associatively displaying at least part of second page content of the information display page includes:
presenting the media content generation page, displaying first page content in the media content generation page, and displaying at least part of the second page content of the information display page on an upper layer of the media content generation page; or
presenting the information display page, displaying second page content in the information display page, and displaying at least part of the first page content of the media content generation page on an upper layer of the information display page.

According to one or more embodiments of the present disclosure, Example 4 is the method according to Example 3, displaying at least part of the second page content of the information display page on the upper layer of the media content generation page includes:
displaying an information display floating layer on the upper layer of the media content generation page, and displaying at least part of the second page content of the information display page in the information display floating layer.

According to one or more embodiments of the present disclosure, Example 5 is the method according to Example 4, further including: after displaying at least part of the second page content of the information display page in the information display floating layer,
adjusting a size of the information display floating layer and/or switching to present the information display page, in response to a presentation adjustment for the information display floating layer, and
adjusting the second page content displayed in the information display floating layer, in response to the presentation adjustment for the information display floating layer.

According to one or more embodiments of the present disclosure, Example 6 is the method according to Example 5, adjusting the size of the information display floating layer in response to a size adjustment for the information display floating layer includes:
increasing a size of the information display floating layer from a first size to a second size, in response to swiping along a first direction for the information display floating layer; and
adjusting the second page content displayed in the information display floating layer include:
increasing the second page content displayed in the information display floating layer according to the second size.

According to one or more embodiments of the present disclosure, Example 7 is the method according to Example 5, adjusting the size of the information display floating layer in response to the size adjustment for the information display floating layer includes:
reducing a size of the information display floating layer from a second size to a first size, in response to swiping along a second direction for the information display floating layer; and
adjusting the second page content displayed in the information display floating layer include:
reducing the second page content displayed in the information display floating layer according to the first size.

According to one or more embodiments of the present disclosure, Example 8 is the method according to Example 5, switching to present the information display page includes:
canceling the presentation of the information display floating layer, and presenting the information display page.

According to one or more embodiments of the present disclosure, Example 9 is the method according to Example 4, displaying the information display floating layer on the upper layer of the media content generation page includes:
displaying, with a first size, the information display floating layer on the upper layer of the media content generation page;
controlling the information display floating layer to be adjusted from the first size to the second size, in accordance with a display duration of the information display floating layer reaching a first predetermined duration;
controlling the information display floating layer to be restored from the second size to the first size; and
maintaining to display, with the first size, the information display floating layer on the upper layer of the media content generation page.

According to one or more embodiments of the present disclosure, Example 10 is the method according to Example 3, further including: after displaying at least part of the second page content of the information display page on the upper layer of the media content generation page,
switching, in response to a first page switching operation, a current page from the media content generation page to the information display page, and displaying the second page content in the information display page.

According to one or more embodiments of the present disclosure, Example 11 is the method according to Example 10, further including: after switching the current page from the media content generation page to the information display page,
switching, in response to a second page switching operation, the current page from the information display page to the media content generation page, displaying the first page content in the media content generation page, and displaying at least part of the second page content of the information display page on the upper layer of the media content generation page.

According to one or more embodiments of the present disclosure, Example12 is the method according to Example 11, at least part of the second page content is displayed within the information display floating layer, and the first page switching operation including swiping along a third direction for the information display floating layer.

According to one or more embodiments of the present disclosure, Example 13 is the method according to Example 12, displaying at least part of the second page content of the information display page on the upper layer of the media content generation page includes:
redisplaying the information display floating layer, and displaying at least part of the second page content of the information display page within the information display floating layer.

According to one or more embodiments of the present disclosure, Example 14 is the method according to Example 3, including: displaying at least part of the first page content of the media content generation page on the upper layer of the information display page includes:
additionally displaying at least part of the first page content of the media content generation page on the upper layer of the information display page, in accordance with a presentation duration of the information display page reaching a second predetermined duration.

According to one or more embodiments of the present disclosure, Example 15 is the method according to Example 3, displaying at least part of the first page content of the media content generation page on the upper layer of the information display page includes:
displaying a media content generation floating layer on the upper layer of the information display page, and displaying at least part of the first page content of the media content generation page in the media content generation floating layer.

According to one or more embodiments of the present disclosure, Example 16 is the method according to Example 15, including: after displaying at least part of the first page content of the media content generation page on the upper layer of the information display page,
canceling the display of the first page content and maintaining to display the information display page, in response to a cancellation of the display for the first page content.

According to one or more embodiments of the present disclosure, Example 17 is the method according to Example 16, the cancellation of the display for the first page content includes swiping along a fourth direction for the media content generation floating layer and/or clicking on the media content generation floating layer.

According to one or more embodiments of the present disclosure, Example 18 is the method according to Example 16, further including: after canceling the display of the first page content,
redisplaying at least part of the first page content of the media content generation page on the media content generation floating layer on the information display page, in response to a display operation for the first page content.

According to one or more embodiments of the present disclosure, Example 19 is the method according to Example 3, further including:
displaying, on the information display page, a predetermined control for triggering the presentation of the media content generation page.

According to one or more embodiments of the present disclosure, Example 20 is the method according to Example 19, further including:
presenting the media content generation floating layer on the information display page, in response to a trigger for the predetermined control; or
converting the information display page into a floating layer presented on the media content generation page, in response to the trigger for the predetermined control.

According to one or more embodiments of the present disclosure, Example 21 is the method according to any one of examples 1-20, the media content generation page includes a capturing page; and/or the at least part of the second page content is a predetermined second page content or a second page content that is most recently viewed by a user before the predetermined page display operation is received.

According to one or more embodiments of the present disclosure, Example 22 is the method according to any one of examples 1-20, the at least part of the second page content includes a search region and/or at least one second media content.

According to one or more embodiments of the present disclosure, Example 23 provides an apparatus for displaying page content, including:
an operation receiving module, configured to receive a predetermined page display operation for a media content generation page, the media content generation page being configured to obtain and/or generate first media content;
a content display module, configured to display, in response to the predetermined page display operation, at least part of first page content of the media content generation page, and associatively display at least part of second page content of information display page, the information display page displaying a predetermined media content set, and the predetermined media content set being a set of at least part of second media content that has been posted.

According to one or more embodiments of the present disclosure, Example 24 provides an electronic device, including:
one or more processors;
a memory, configured to store one or more programs;
when the one or more programs are executed by the one or more processors, the one or more processors are caused to perform the method for displaying page content according to any of Examples 1-22.

According to one or more embodiments of the present disclosure, Example 25 provides a computer-readable storage medium having stored thereon a computer program, the program, when executed by a processor, implements the method for displaying page content according to any of Examples 1-22.

The above description is merely an illustration of the preferred embodiments in the present disclosure and the principles of the applied technology. It should be understood by those skilled in the art that the scope of the present disclosure is not limited to the technical solutions of the specific combination of the above technical features, and should also cover other technical solutions formed by any combination of the above technical features or their equivalent features without departing from the above disclosed concept. For example, technical solutions formed by replacing the above features with technical features having similar functions as disclosed (but not limited to those disclosed) in the present disclosure are also included.

Further, although operations are depicted in a particular order, this should not be understood to require that these operations be performed in the particular order shown or in sequential order. In certain circumstances, multitasking and parallel processing may be advantageous. Likewise, although several specific embodiment details are included in the above discussion, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it should be understood that the subject matter defined in the appended claims is not necessarily limited to the specific features or acts described above. Rather, the specific features and acts described above are merely illustrative forms of implementing the claims.

## Claims

1. A method for displaying page content, comprising:
receiving a predetermined page display operation for a media content generation page, the media content generation page being configured to obtain and/or generate first media content; and
displaying, in response to the predetermined page display operation, at least part of first page content of the media content generation page, and associatively displaying at least part of second page content of information display page, the information display page displaying a predetermined media content set, and the predetermined media content set being a set of at least part of second media content that has been posted.

2. The method of claim 1, wherein at least part of the first page content and at least part of the second page content are displayed at different interface levels.

3. The method of claim 2, wherein displaying at least part of first page content of the media content generation page and associatively displaying at least part of second page content of the information display page comprises:
presenting the media content generation page, displaying first page content in the media content generation page, and displaying at least part of the second page content of the information display page on an upper layer of the media content generation page; or
presenting the information display page, displaying second page content in the information display page, and displaying at least part of the first page content of the media content generation page on an upper layer of the information display page.

4. The method of claim 3, wherein displaying at least part of the second page content of the information display page on the upper layer of the media content generation page comprises:
displaying an information display floating layer on the upper layer of the media content generation page, and displaying at least part of the second page content of the information display page in the information display floating layer.

5. The method of claim 4, wherein the method further comprises: after displaying at least part of the second page content of the information display page in the information display floating layer,
adjusting a size of the information display floating layer and/or switching to present the information display page, in response to a presentation adjustment for the information display floating layer, and
adjusting the second page content displayed in the information display floating layer, in response to the presentation adjustment for the information display floating layer.

6. The method of claim 5, wherein adjusting the size of the information display floating layer in response to a size adjustment for the information display floating layer comprises:
increasing a size of the information display floating layer from a first size to a second size, in response to swiping along a first direction for the information display floating layer; and
adjusting the second page content displayed in the information display floating layer comprises:
increasing the second page content displayed in the information display floating layer according to the second size.

7. The method of claim 5, wherein adjusting the size of the information display floating layer in response to the size adjustment for the information display floating layer comprises:
reducing a size of the information display floating layer from a second size to a first size, in response to swiping along a second direction for the information display floating layer; and
adjusting the second page content displayed in the information display floating layer comprises:
reducing the second page content displayed in the information display floating layer according to the first size.

8. The method of claim 5, wherein switching to present the information display page comprises:
canceling the presentation of the information display floating layer, and presenting the information display page.

9. The method of claim 4, wherein displaying the information display floating layer on the upper layer of the media content generation page comprises:
displaying, with a first size, the information display floating layer on the upper layer of the media content generation page;
controlling the information display floating layer to be adjusted from the first size to the second size, in accordance with a display duration of the information display floating layer reaching a first predetermined duration;
controlling the information display floating layer to be restored from the second size to the first size; and
maintaining to display, with the first size, the information display floating layer on the upper layer of the media content generation page.

10. The method of claim 3, wherein the method further comprises: after displaying at least part of the second page content of the information display page on the upper layer of the media content generation page,
switching, in response to a first page switching operation, a current page from the media content generation page to the information display page, and displaying the second page content in the information display page.

11. The method of claim 10, wherein the method further comprises: after switching the current page from the media content generation page to the information display page,
switching, in response to a second page switching operation, the current page from the information display page to the media content generation page, displaying the first page content in the media content generation page, and displaying at least part of the second page content of the information display page on the upper layer of the media content generation page.

12. The method of claim 11, wherein at least part of the second page content is displayed within the information display floating layer, and the first page switching operation comprising swiping along a third direction for the information display floating layer.

13. The method of claim 12, wherein displaying at least part of the second page content of the information display page on the upper layer of the media content generation page comprises:
redisplaying the information display floating layer, and displaying at least part of the second page content of the information display page within the information display floating layer.

14. The method of claim 3, wherein displaying at least part of the first page content of the media content generation page on the upper layer of the information display page comprises:
additionally displaying at least part of the first page content of the media content generation page on the upper layer of the information display page, in accordance with a presentation duration of the information display page reaching a second predetermined duration.

15. The method of claim 3, wherein displaying at least part of the first page content of the media content generation page on the upper layer of the information display page comprises:
displaying a media content generation floating layer on the upper layer of the information display page, and displaying at least part of the first page content of the media content generation page in the media content generation floating layer.

16. The method of claim 15, wherein the method further comprises: after displaying at least part of the first page content of the media content generation page on the upper layer of the information display page,
canceling the display of the first page content and maintaining to display the information display page, in response to a cancellation of the display for the first page content.

17. The method of claim 16, wherein the cancellation of the display for the first page content comprises swiping along a fourth direction for the media content generation floating layer and/or clicking on the media content generation floating layer.

18. The method of claim 16, wherein the method further comprises: after canceling the display of the first page content,
redisplaying at least part of the first page content of the media content generation page on the media content generation floating layer on the information display page, in response to a display operation for the first page content.

19. The method of claim 3, further comprising:
displaying, on the information display page, a predetermined control for triggering the presentation of the media content generation page.

20. The method of claim 19, further comprising:
presenting the media content generation floating layer on the information display page, in response to a trigger for the predetermined control; or
converting the information display page into a floating layer presented on the media content generation page, in response to the trigger for the predetermined control.

21. The method of any of claims 1 to 20, wherein the media content generation page comprises a capturing page; and/or
the at least part of the second page content is a predetermined second page content or a second page content that is most recently viewed by a user before the predetermined page display operation is received.

22. The method of any of claims 1 to 20, wherein the at least part of the second page content comprises a search region and/or at least one second media content.

23. An apparatus for displaying page content, comprising:
an operation receiving module, configured to receive a predetermined page display operation for a media content generation page, the media content generation page being configured to obtain and/or generate first media content; and
a content display module, configured to display, in response to the predetermined page display operation, at least part of first page content of the media content generation page, and associatively display at least part of second page content of information display page, the information display page displaying a predetermined media content set, and the predetermined media content set being a set of at least part of second media content that has been posted.

24. An electronic device, comprising:
at least one processor; and
a memory communicatively connected to the at least one processor, wherein
the memory stores a computer program executable by the at least one processor, and the computer program, when executed by the at least one processor, causes the at least one processor to perform the method for displaying page content according to any of claims 1 to 22.

25. A computer-readable storage medium storing computer instructions for causing a processor to perform the method for displaying page content according to any of claims 1 to 22.
